# EUROPEAN PATENT APPLICATION

(11) **EP 2 746 146 A2**
(43) Date of publication of application: **25.06.2014**
(21) Application number: 13196681.4
(22) Date of filing: 11.12.2013
(51) Int. Cl.: B63B 35/38

(54) **Floating platform**

(30) Priority: 20.12.2012 RU 2012155421
(71) Applicant: OOO "Nauchno - proizvodstvennyj tsentr "Rodemos", 129337 Moscow (RU)
(72) Inventor: Shabanov, Vladimir, 129164 Moscow (RU)
(74) Representative: Lapienis, Juozas

(57) **Abstract**

The invention relates to floating equipment designed for specific purposes, namely, to pontoons, floating docks, rafts and other floating structures.

The floating platform comprises at least two floating elements (2) linked by means of at least one fastening element (1), the two floating elements consisting of at least two lateral faces (3, 4) with at least one vertical projection (5) on one of them and at least one vertical projection on the other of the at least two lateral faces (6, 7) with at least one vertical cavity on one of them and at least one vertical cavity (8) on the other, corresponding to the vertical projection (5); and comprises top and bottom faces forming together a hollow body (1) of the corresponding floating element (2) with at least one eye for placing the fastening element (1). Each vertical projection and each vertical cavity is provided on a portion of corresponding lateral face to form a supporting surface (13) on the projection and a supported surface (14) in the cavity.

## Description

The invention relates to floating equipment designed for specific purposes, namely, to pontoons, floating docks, rafts and other floating structures.

The closest in technical essence to the invention proposed is a floating platform chosen as a prototype, comprising at least two floating elements linked by means of at least one fastening element, the two floating elements consisting of at least two lateral faces with at least one vertical projection on one of them and at least one vertical projection on the other of the at least two lateral faces with at least one vertical cavity on one of them and at least one vertical cavity on the other, corresponding to the vertical projection; of top and bottom faces forming together a hollow body of the corresponding floating element with at least one eye for placing the fastening element. (Russian Federation patent 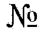 2322549, dated on 30.09.2005).

The prototype disadvantages are the unreliability of the design caused by the increased stress effecting the eyes due to the vertical loads and the platform floating elements imbalances through their unreliable fixation because of the emerging forces leading to the wavelike or angular projections mutual displacement relative to the wavelike or angular cavities in the course of their interaction, and through the hollow body lateral faces insufficient rigidity.

The technical result of the invention as provided consists in reducing the load effecting the eyes that is achieved with transferring the vertical loads from the vertical cavities supported surfaces to the vertical projections supporting surfaces, as well as with improving the floating elements fixation within the floating platform due to the absence of the forces leading to mutual displacement of the rectangular projections relative to the rectangular cavities in the course of their interaction while being fixed; and in increasing the rigidity of the hollow bodies side faces of the floating elements, that leads to higher reliability of the whole structure and extends the operational capabilities through increasing the external load bearing capacity of the floating platform, while preserving the same material consumption or through reducing material consumption (the thickness of the hollow bodies and eyes) while preserving the same external load bearing capacity.

The technical result as stated is achieved with a floating platform comprising at least two floating elements linked by means of at least one fastening element, the two floating elements consisting of at least two lateral faces with at least one vertical projection on one of them and at least one vertical projection on the other of the at least two lateral faces with at least one vertical cavity on one of them, and at least one vertical cavity on the other, corresponding to the vertical projection; of top and bottom faces forming together a hollow body of the corresponding floating element with at least one eye for placing the fastening element, wherein each vertical projection and each vertical cavity being provided on a portion of the corresponding lateral face to form a supporting surface on the projection and a supported surface in the cavity. Furthermore, the height ***h1*** of the lateral faces portions from the top face to the vertical projections supporting surfaces may be made equal to the height ***h2*** of the lateral faces portions from the top face to the vertical cavities supported surfaces, and each vertical projection and the corresponding vertical cavity may be formed with at least three faces, two of which being parallel to each other and perpendicular to the third one.
Fig. 1 shows an isometric general view of a floating platform consisting of four floating elements,
Fig. 2 is a bottom view of the platform,
Fig. 3 is a plan view of a floating platform consisting of two floating elements,
Fig. 4 is an isometric view of the three floating elements being linked.

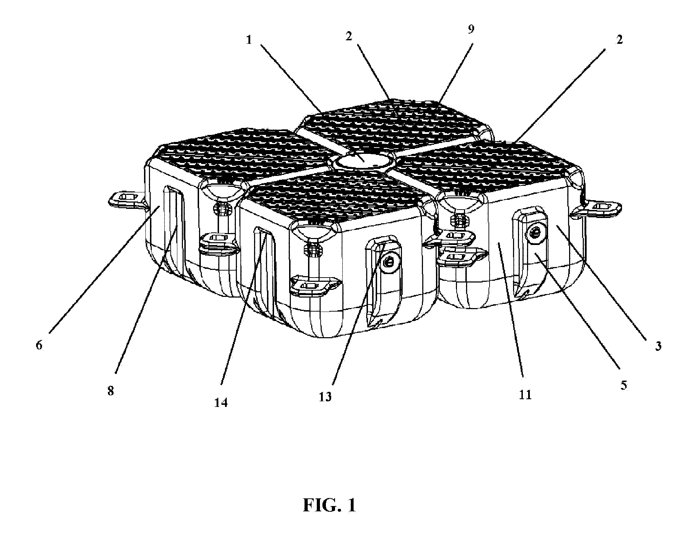

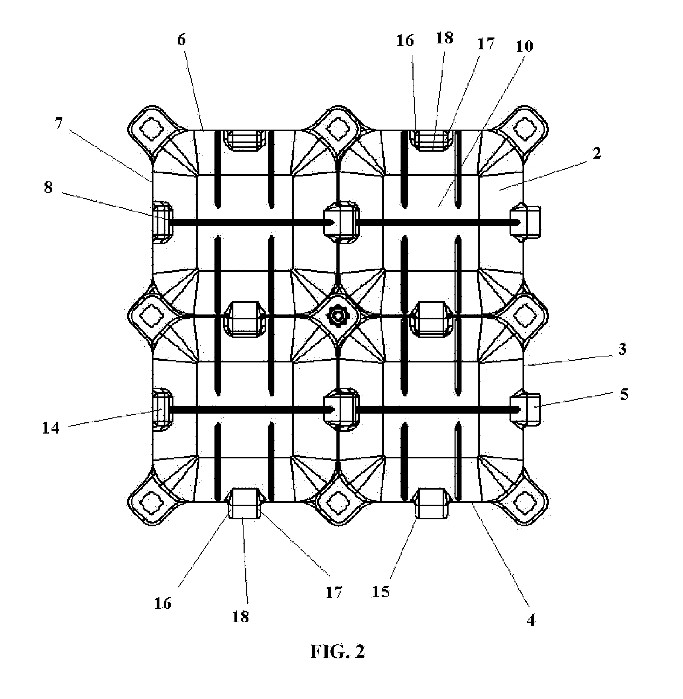

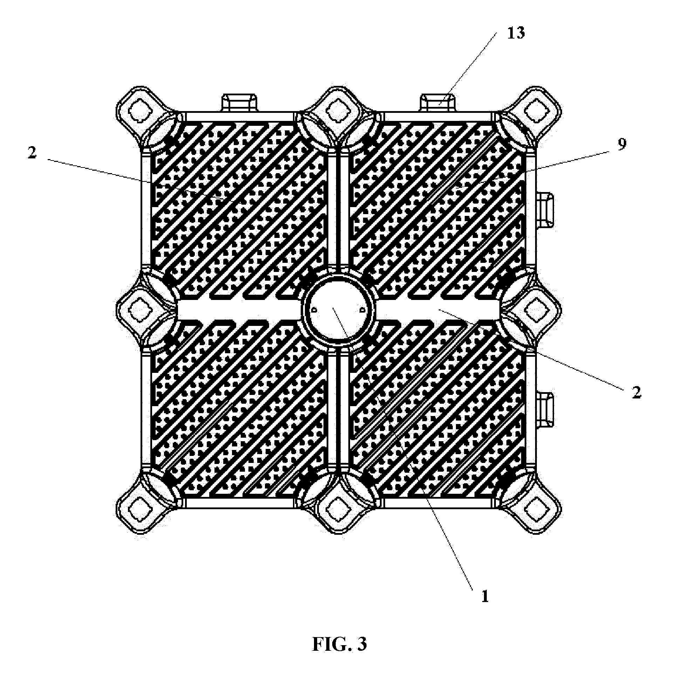

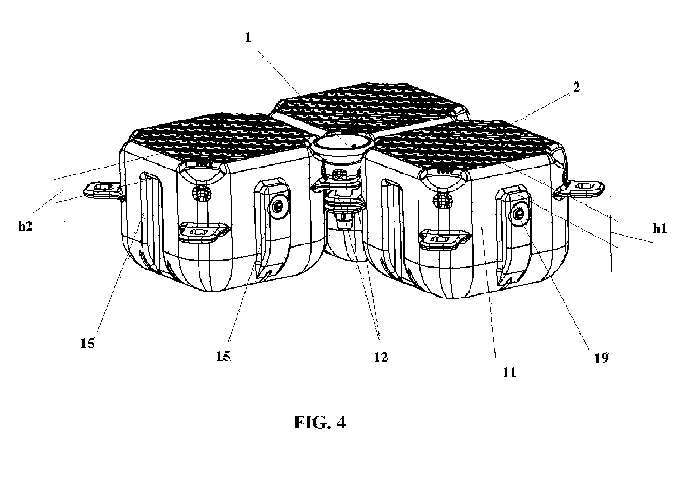

A floating platform comprises at least two floating elements 2 coupled by means of at least one fastening element 1, wherein the two floating elements 2 consisting of at least two lateral faces 3 and 4 with at least one vertical projection 5 on one of them and at least one vertical projection 5 on the other of the at least two lateral faces 6 and 7 with at least one vertical cavity 8 on one of them and at least one vertical cavity 8 on the other, corresponding to the vertical projection 5; and comprises of a top face and a bottom face 10 forming together a hollow body 11 of the corresponding floating element 2 with at least one eye 12 (Fig. 1, 2 and 4 show floating elements 2 each having four eyes 12, Fig. 3 shows the floating elements 2 each having six eyes) for placing the fastening element 1. Each vertical projection 5 and each vertical cavity 8 are provided on a portion of the corresponding lateral faces 3, 4 and 6, 7 to form a supporting surface 13 on the projection 5 and a supported surface 14 in the cavity 8. Furthermore, the height ***h1*** of the portions of lateral faces 3 and 4 from the top face 9 to the supporting surfaces 13 of the vertical projections 5 may be made equal to the height ***h2*** of the portions of lateral faces 6 and 7 from the top face 9 to the supported surfaces 14 of the vertical cavities 8, and each vertical projection 5 and the corresponding vertical cavity 8 may be formed with at least three faces (engineering roundings 15 are additionally shown), two (16 and 17) of which being parallel to each other and perpendicular to the third one (18). In each floating element 2 performed in the hollow body 11 by means of extrusion blow molding an access hole locked with a plug 19 is provided.

The floating platform operates as follows:
The floating platform is assembled into an integrated construction of floating elements 2 through linking the eyes 12 of the bodies 11 by means of the fastening elements 1.

After the floating elements 2 being linked, the supported surfaces 14 of the vertical cavities 8 are supported (with vertical load bearing capability) with the supporting surfaces 13 of the adjacent vertical projections 5 of the floating elements 2, thus reducing the loads effecting the eyes 12. Due to each vertical projection 5 and each vertical cavity 8 provided on a portion of the corresponding lateral face 3, 4 and 6, 7, thus forming a supporting surface 13 on the projection 5 and a supported surface 14 in the cavity 8, this technical solution allows for transferring the vertical loads from the supported surfaces 14 of the vertical cavities 8 to the supporting surfaces 13 of the vertical projections 5 thus relieving the eyes 13. Whereby, the heights ***h1*** of the portions of lateral faces 3 and 4 from the top face 9 to the supporting surfaces 13 of the vertical projections 5 being equal to the heights ***h2*** of the portions of lateral faces 6 and 7 from the top face 9 to the supported surfaces 14 of the vertical cavities 8 allows for uniform vertical loads distribution over the top faces 9 of the floating elements 2, while each vertical projection 5 and each corresponding vertical cavity 8 being formed with at least three faces, two of which (16 and 17) being parallel to each other and perpendicular to the third one (18), together resembling a channel bar 7, additionally reduces the loads effecting the eyes 12 due to improving fixation of the floating elements 2 within the floating platform through the absence of the forces leading to mutual displacement of the rectangular projections 5 relative to the rectangular cavities 8 in the course of their interaction while being fixed; and increases the axial moments of inertia for the lateral faces cross section thus increasing rigidity of the hollow bodies 11 side faces 3, 4, 6 and 7 of the floating elements 2, while preserving production effectiveness of each floating element 2, that in its turn leads to higher reliability of the whole structure and extends the operational capabilities through increasing the external load bearing capacity of the floating platform, while preserving the same material consumption or through reducing material consumption (the hollow bodies 11 and eyes 12 thickness) while preserving the same external load bearing capacity.

## Claims

1. A floating platform comprising at least two floating elements linked by means of at least one fastening element, the two floating elements consisting of at least two lateral faces with at least one vertical projection on one of them and at least one vertical projection on the other of the at least two lateral faces with at least one vertical cavity on one of them and at least one vertical cavity on the other, corresponding to the vertical projection; and comprising of a top face and a bottom face forming together a hollow body of the corresponding floating element with at least one eye for placing the fastening element, **characterized in that** each vertical projection and each vertical cavity being provided on a portion of the corresponding lateral face to form a supporting surface on the projection and a supported surface in the cavity.

2. The floating platform of claim 1, **characterized in that** the height ***h1*** of portions of the lateral faces from the top face to the supporting surfaces of the vertical projections may be made equal to the height ***h2*** of the portions of the lateral faces from the top face to the supported surfaces of the vertical cavities.

3. The floating platform of claims 1 or 2, **characterized in that** each vertical projection and the corresponding vertical cavity are formed with at least three faces, two of which being parallel to each other and perpendicular to the third one.
